# EUROPEAN PATENT APPLICATION

(11) **EP 2 615 517 A2**
(43) Date of publication of application: **17.07.2013**
(21) Application number: 13150682.6
(22) Date of filing: 09.01.2013
(51) Int. Cl.: G05D 23/19, F24F 11/00

(54) **Air temperature controller**

(30) Priority: 11.01.2012 US 201213348100
(71) Applicant: Hamilton Sundstrand Corporation, Windsor Locks, CT 06096-1010 (US)
(72) Inventor: Semyanko, Andrew, South Windsor, CT 06074 (US)
(74) Representative: Bridge, Kerry Ann

(57) **Abstract**

An air conditioning system, 100, includes an air conditioning unit. 110, and a controller, 108, in operative communication with the air conditioning unit, 110. The controller, 108, creates a temperature estimation to control operation of the air conditioning unit from readings received from a plurality of temperature sensors, 106. The temperature estimation is formed by averaging the readings received from the plurality of temperature sensors, 106, to form a preliminary average, excluding one of the plurality of temperature sensors that provided a reading furthest away from the preliminary average to form a subset of the plurality of temperature sensors, and forming the temperature estimation based on the subset.

## Description

### FIELD OF INVENTION

The subject matter disclosed herein relates generally to the field of air control and, in particular, to controlling air temperature.

### DESCRIPTION OF RELATED ART

The control of air temperature in a closed environment can be a complicated process. Generally, the process involves measuring the current temperature with one or more sensors and adjusting the temperature of the air provided to the environment to meet desired specifications. One problem that can exist in such systems is so-called "measurement drift." Measurement drift occurs when the sensors begin to function improperly and introduce an offset into their measurements (either in the positive or negative dircction). Another problem that can exist in such systems arises due to failure of one or more of the sensors.

Suppose, for example, that the closed environment includes three or more sensors. One approach that could be used to address one or both of the above problems is to average either the two highest or the two lowest reading sensors. Assume that the lowest reading sensor has failed. Averaging the two high reading sensors would ignore the lowest reading (e.g., failed) sensor and could help to reduce the effects of temperature drift in one or both of the two sensors. Such an approach can help prevent over-temperature issues in an environment. However, if one of the two highest reading temperature sensors has drifted high, the control will be biased to decrease the actual temperature in the environment.

In another example, suppose the system of sensors includes two dual-element sensors for a total of four individual sensors. In such a system, one approach is to average the sensors that provide the two middle temperatures, This approach generally works well but may experience issues when one of the dual-element sensors experiences a so-called "mis-compare" fault where the two elements of dual-element sensor provide readings that are far enough apart that the sensor is considered "failed." In such a case, the readings of both elements are ignored and the average is based on the two elements within a single dual-element sensor.

### SUMMARY OF THE INVENTION

According to one aspect of the invention, an air conditioning system that includes an air conditioning unit and a controller in operative communication with the air conditioning unit is disclosed. In this aspect, the controller creates a temperature estimation to control operation of the air conditioning unit from readings received from a plurality of temperature sensors. The temperature estimation is formed by averaging the readings received from the plurality of temperature sensors to form a preliminary average, excluding one of the plurality of temperature sensors that provided a reading furthest away from the preliminary average to form a subset of the plurality of temperature sensors, and forming the temperature estimation based on the subset.

According to another aspect of the invention, a method of controlling an air conditioning unit providing conditioned air to an environment is disclosed. The method of this embodiment includes: receiving temperature readings from a plurality of temperature sensors at a controller; averaging, in the controller, the readings received from the plurality of temperature sensors to form a preliminary average; excluding one of the plurality of temperature sensors that provided a reading furthest away from the preliminary average to form a subset of the plurality of temperature sensors; forming the temperature estimation based on the subset; and providing the temperature estimation from the controller to the air conditioning unit.

Other aspects, features, and techniques of the invention will become more apparent from the following description taken in conjunction with the drawings.

### BRIEF DESCRIPTION OF THE SEVERAL VIEWS OF THE DRAWINGS

Referring now to the drawings wherein like elements are numbered alike in the several FIGURES:

FIG. 1 is a simplified block diagram illustrating a temperature measurement and control system for use in an environment; and

FIG. 2 is a block diagram illustrating a method according to one embodiment.

### DETAILED DESCRIPTION

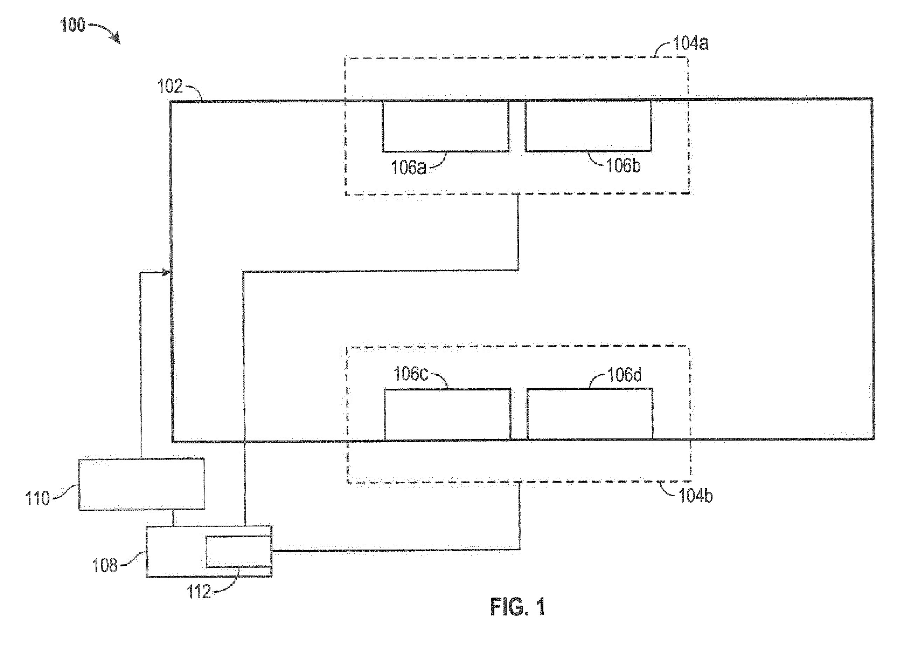

FIG. 1 illustrates a temperature measurement and control system 100 ("system") for controlling the air temperature in environment 102. The system 100 includes two or more sensor units 104. The sensor units 104 are coupled to a controller 108. The controller 108 is configured to provide control instructions to an air conditioning unit 110 that provides temperature-controlled air to the environment 102. Thus, as illustrated, the system 100 includes sensor units 104, controller 108 and air conditioning unit 110. Of course, the system 100 could include additional elements as well. Further, it shall be understood that the controller 108 could be included within the air conditioning unit 110.

As is generally known in the art, the air conditioning unit 110 can change the temperature of the air in the environment 102 by providing either air that is warmer or colder than the air currently in the environment 102. In one embodiment, the environment 102 is the cabin of an aircraft. In such an embodiment it is important that the temperature in cabin be kept at a desired level over a broad range of external temperatures. In order to effectively do this, the temperature of the air in the cabin (e.g., environment 102) needs to be accurately known. One approach is to employ multiple sensor units 104 to compensate for sensor drift or failure, or both.

The sensor units 104 illustrated in FIG. 1 are dual-element sensors that each includes two separate sensors 106. For instance, first sensor unit 104a includes a first sensor 106a and a second sensor 106b and second sensor unit 104b includes a third sensor 106c and a fourth sensor 106d. The sensors units 104 measure the temperature in the environment 102. Of course, the sensors 106 could be independent of one another and individually coupled to the controller 108. In addition, while four sensors 106 are illustrated in FIG. 1, it shall be understood that any number of sensor greater than two could be utilized in a system 100 according to the disclosure herein.

In one embodiment, readings made by each of the sensors 104 are provided to temperature logic 112 within the controller 108. The temperature logic 112 includes one or more algorithms for determining the temperature in the environment 102 based on readings from all of the sensors 104 (assuming all are operating properly). Of course, and as explained further below, in some cases in may be known that one of the sensors 104 is operating incorrectly or has failed and that sensor is excluded from consideration in determination of the temperature. Based on the temperature established by the temperature logic 112, the controller 108 can command the air conditioning unit 110 to raise, lower, or keep the same, the temperature of air it provides to the environment 102.

In general, the temperature logic 112 examines the temperatures from all of the functioning sensors and ignores the one that provides a temperature is further from an average of all of the sensors. In more detail, assume that the system 100 is configured as shown in FIG. 1. Because the sensors are located generally proximal to each other it is safe to conclude that they are exposed to roughly the same air temperature and should all produce the same temperature reading. However, due to hardware and transmission error (as well as software read errors) the temperature readings can vary. Stated differently, if all four sensors 106a, 106b, 106c and 106d are reading the temperature in the environment 102 at the same time and providing it to the logic 112, one of the four sensors will be more incorrect than the other three. According to one embodiment, the most incorrect sensor is ignored. This can be accomplished by averaging all four temperature sensors readings to form a preliminary average and forming an actual temperature by averaging the readings of the three sensors that are closest to the preliminary average. In this manner, if all four temperature sensors are operating correctly, the three closest temperature sensors will always be averaged for control giving the best possible control point and preventing drift error from biasing the control point. If one of the four temperature sensors becomes invalid or failed, the same control will be used for the remaining three temperature sensors: the two closest sensors will be used for control while the third (farthest from the average) will be disregarded. Further, if two of the temperature sensors are invalid, the control will change to use the average of the remaining two temperature sensors.

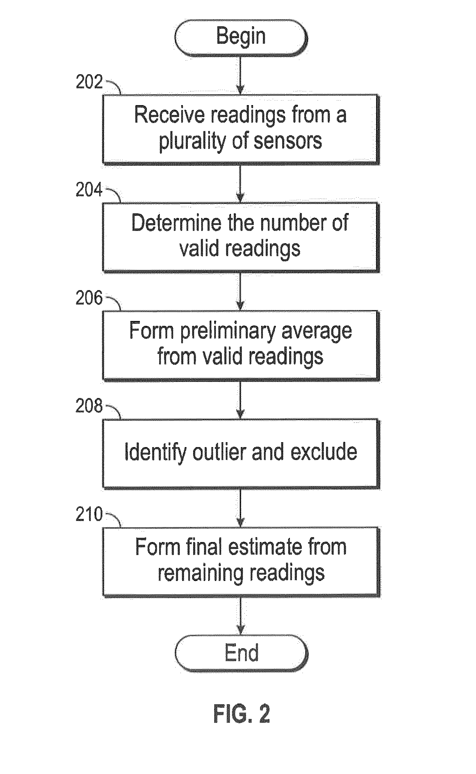

FIG. 2 is flow chart illustrating a method according to one embodiment. The method can be used to create an estimated temperature from multiple sensors. In one embodiment, the estimated temperature can be used in controlling the operation of an air conditioning system. The particular method shown in FIG. 2 could be implemented, for example, by the temperature logic 112 shown in FIG. 1. It should be understood, however, the method could be implemented on any general or specific purpose computer and could be embodied as a set of instructions stored in a tangible storage medium that cause a computer to perform the method shown in FIG. 2. The method of FIG. 2 can be implemented in hardware circuitry, including one or more programmable logic devices and/or in combination with executable instructions stored in a tangible storage medium.

At block 202, readings from a plurality of sensors are received. The sensors are temperature sensors in one embodiment and can be displaced in an aircraft cabin. The sensors could be individual sensors that provide a single reading or, as described above, could be dual-element sensors that provide two or more readings. Regardless, the number of valid readings is determined at block 204. Determination of the number of valid readings can be performed in many different manners. For instance, error checking could be applied to the received reading to make sure the message including a particular reading was not corrupted. Also, readings that are further away from other readings than a preset or adaptive level could be considered error and ignored. For instance, suppose that three of four readings are in the range within 10% of one another. If the fourth is more then 50% different than two of the remaining three, it could be discarded. It shall be understood that the above are merely examples and any type of determination may be utilized.

At block 206 a preliminary average of all of the valid sensor readings is formed. Assuming that there are more than three valid sensor readings, at block 208 the reading that is furthest from the preliminary average (e.g. the outlier) is determined and excluded from further processing. At block 210 a final temperature estimation is formed by averaging all of the readings except for the one furthest from the preliminary average.

The method shown in FIG. 2 can be performed periodically or continuously. In one embodiment, if a particular sensor is repeatedly the furthest from the preliminary average, a flag may be set so that its reading is not considered a valid reading.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions, or equivalent arrangement not hereto described will be apparent to those of ordinary skill in the art without departing from the scope and spirit of the invention. Additionally, while various embodiment of the invention have been described, it is to be understood that aspects of the invention may include only some of the described embodiments. Accordingly, the invention is not to be seen as limited by the foregoing description, but is only limited by the scope of the appended claims.

## Claims

1. An air conditioning system (100) comprising:
an air conditioning unit (110); and
a controller (108) in operative communication with the air conditioning unit (110), the controller creating a temperature estimation to control operation of the air conditioning unit from readings received from a plurality of temperature sensors (106), wherein the temperature estimation is formed by averaging the readings received from the plurality of temperature sensors to form a preliminary average, excluding one of the plurality of temperature sensors that provided a reading furthest away from the preliminary average to form a subset of the plurality of temperature sensors, and forming the temperature estimation based on the subset.

2. The system of claim 1, further comprising:
the plurality of temperature sensors (106).

3. The system of claim 2, wherein the plurality of temperature sensors includes four or more temperature sensors (106a, 106b, 106c, 106d).

4. The system of claim 2, wherein the plurality of temperature sensors are all included in two dual-element sensors.

5. The system of claim 1, wherein the air conditioning unit is operatively coupled to a cabin of an aircraft and provides conditioned air thereto.

6. The system of claim 5, wherein a temperature of the conditioned air provided to the cabin depends on the temperature estimation.

7. The system of claim 1, wherein the controller (108) is included within the air conditioning unit (110).

8. The system of claim 1, wherein the controller forms the temperature estimation based on the subset by averaging the readings of the subset.

9. A method of controlling an air conditioning unit (110) providing conditioned air to an environment, the method comprising:
receiving temperature readings from a plurality of temperature sensors (106) at a controller;
averaging, in the controller (108), the readings received from the plurality of temperature sensors (106) to form a preliminary average;
excluding one of the plurality of temperature sensors (106) that provided a reading furthest away from the preliminary average to form a subset of the plurality of temperature sensors;
forming the temperature estimation based on the subset; and
providing the temperature estimation from the controller to the air conditioning unit.

10. The method of claim 9, wherein the plurality of temperature sensors (106) includes four or more temperature sensors (106a, 106b, 106c, 106d).

11. The method of claim 10, wherein the plurality of temperature sensors (106) are all included in two dual-element sensors.

12. The method of claim 9, wherein the controller (108) is included within the air conditioning unit (110).

13. The method of claim 9, wherein forming the temperature estimation based on the subset includes averaging the readings of the subset.
